# EUROPEAN PATENT APPLICATION

(11) **EP 4 818 669 A1**
(43) Date of publication of application: **07.10.2026**
(21) Application number: 26168422.9
(22) Date of filing: 27.03.2026
(51) Int. Cl.: G01M 3/28

(54) **SYSTEM, METHOD AND COMPUTER PROGRAM FOR LOCATING WATER LEAKS IN A WATER NETWORK**

(30) Priority: 28.03.2025 IT 202500006660
(71) Applicant: Università Degli Studi Di Ferrara, 44121 Ferrara (IT)
(72) Inventor: ALVISI, Stefano, 44121 Ferrara (FE) (IT); MAZZONI, Filippo, 44123 Ferrara (FE) (IT); MARSILI, Valentina, 44123 Ferrara (FE) (IT)
(74) Representative: Metroconsult Srl

(57) **Abstract**

A system (100) is described for locating water leaks in a water network connected to at least one user to which a water consumption is associated, the system (100) comprising at least one processor (110) configured to receive a hydraulic model for said water network comprising structural characteristics of a plurality of conduits (1, 2, 3, 4, 5, 6, 7) and of a plurality of nodes (10, 20, 30, 40, 50, 60), wherein said plurality of nodes (10, 20, 30, 40, 50, 60) is defined as connection points between at least two conduits belonging to the plurality of conduits (1, 2, 3, 4, 5, 6, 7); receive first flow rate data of an incoming water flow into the water network, wherein said first data are measured by means of first sensor means (130) associated with at least one inlet node (10), said at least one inlet node (10) being a node belonging to the plurality of nodes (10, 20, 30, 40, 50, 60) through which the water flow enters the water network; receive second pressure head data measured by means of second sensor means (140) associated with a plurality of sensor nodes (30, 50), said plurality of sensor nodes (30, 50) being a subset of the plurality of nodes (10, 20, 30, 40, 50, 60) through which the water flow from the at least one inlet node (10) circulates; receive third water consumption data of the at least one user, wherein said third water consumption data are measured by means of third sensor means (150) associated with each node of the plurality of nodes (10, 20, 30, 40, 50, 60); locate at least one water leak by means of a mathematical model suitable for calculating a water leak value for the plurality of sensor nodes (30, 50) as a function of a water balance between a volume of water introduced into the water network and the water consumption generated by the at least one user in a mass continuity condition imposed on the plurality of nodes (10, 20, 30, 40, 50, 60), said condition being suitable for equating the leaks calculated for the plurality of sensor nodes (30, 50) to the total leaks present in the water network, and wherein said water leak value is calculated as a function of said hydraulic model, said first flow rate data, said second pressure data and said third water consumption data.

## Description

The present invention relates to a system, a method and a computer program in the field of sustainable maintenance and management of water distribution networks. More particularly, the present invention relates to a system, a method and a computer program for locating water leaks in a water distribution network.

The correct management of the water resource is a more topical problem than ever, given that water represents a limited resource whose availability is decreasing over time. The growing importance of safeguarding the water resource determines, among the various actions that are necessary, a growing need to adopt measures aimed at making the management of water supply systems more sustainable. An example of such a measure is the adoption of regulations that oblige water managers, in Italy as in several other European states, to reduce the volumes of water lost and to improve the quality of the water supply service.

As is known, the water distribution sector is characterised by a high level of maintenance activity on distribution networks and, in particular, by the activity of detecting any water leaks that may occur at any point in the distribution network.

The problem of water leaks represents one of the main critical issues related to the quality of the water supply service that afflict the operation of distribution networks, which have environmental, economic and social repercussions. The main cause of this problem is the deterioration of the distribution networks, together with the fact that these networks are developed mainly underground, making the identification of leaks and the consequent repair of the conduits more difficult and less immediate.

Various control authorities, for example the Italian Regulatory Authority for Energy, Networks and Environment (ARERA), impose on the water service managing bodies the definition of priority intervention strategies to overcome this problem, reducing a volume of lost water which, in Italy, constitutes on average more than 40% of the volume of water fed into the networks.

Numerous solutions are known in the state of the art that respond to the need of water managers to identify a solution to the problem of water leaks.

A first type of solution involves the use of devices configured for monitoring and detecting water leaks within a water distribution network. A first example of such solutions is represented by the SmartBall technology, i.e., a metal sphere equipped with acoustic sensors. This solution provides that the sphere is inserted inside a conduit and then made to roll inside it by the effect of a water flow to analyse its state. A second example is represented by the use of electro-acoustic detection devices, such as a geophone, for the detection of vibrations generated by a water leak. A further example of a solution is represented by devices configured to perform thermographic surveys. However, this first type of solution proves to be onerous for a water network manager both in terms of time and human resources employed when the monitoring involves large portions of a water network.

A second type of solution instead provides for the use of analysis methods that exploit information acquired by the water network manager and/or collected in the field, such as for example information relating to pressures in certain sections of the water network, user consumption, etc., for the purpose of providing information relating to the location of a leak within a water network.

In fact, the localization of leaks according to this second type of analysis method of the prior art provides for an iterative procedure of successive trials that entails the need to perform a certain number of iterations before being able to provide information relating to the position of said leaks with a certain degree of reliability. In such methods, at each iteration, one tries to allocate one or more leaks at different points of the water network and then proceed with the resolution of the system of equations. Subsequently, this type of method provides for a comparison between the simulated pressures obtained from the resolution of the system of equations and the observed data coming from a plurality of measurements made at the sensor nodes.

For each iteration, it is therefore necessary to adapt the magnitude of the water leak allocated at the plurality of nodes present in the water network until an acceptable deviation is obtained between the simulated pressures and the measured pressures at the sensor nodes. It is evident, therefore, that the number of iterations required is directly proportional to the complexity of the water network and to the number of nodes present. This second type of solution therefore provides for a considerable computational effort due to the numerous hydraulic simulations performed with such algorithms before converging to a solution. Moreover, for those systems based on artificial intelligence, a considerable amount of data is required to carry out a training phase that allows obtaining predictions on the location of leaks with a certain degree of accuracy.

Other possible solutions according to further methods of the prior art provide for the definition of a hydraulic model for the water network of interest, such as the one proposed by Steffelbauer et al. (2022), in which for this hydraulic model the insertion of a fictitious reservoir connected via a fictitious conduit of high conductance is provided for at each sensor node present in the network.

A hydraulic model so defined implies two main limits for this resolution method. The first problem concerns the need to estimate an appropriate value of hydraulic conductance for the fictitious conduits connecting the sensor nodes and the relative fictitious reservoirs where the values of such a parameter can give rise to numerical instabilities in the hydraulic simulation phase. A second problem concerns the lack of guarantee of compliance with the global leak level of the water network.

The object of the present invention is therefore to provide a system, a method and a computer program capable of locating one or more water leaks within a water network, capable of overcoming the drawbacks of the state of the art.

A further object of the present invention is to provide a system, a method and a computer program capable of locating one or more water leaks based on information, provided by a water network manager and/or collected in the field, referring to a time period of limited duration and suitable for defining a motion of the fluid within the pipes of the water network.

Further advantageous features of the present invention are the subject of the appended claims which form an integral part of the present description.

To achieve the aforementioned objects, a system, a method and a computer program suitable for locating water leaks in a water network having the characteristics of the appended claims, which form an integral part of the present description, are therefore the subject of the present invention.

Further objects, characteristics and advantages of the present invention will become clearer from the description of an embodiment thereof shown in the attached drawings, provided purely for exemplary and non-limiting purposes, in which:
- Figure 1 shows an exemplary diagram of a water network represented according to the prior art;
- Figure 2 shows an exemplary diagram of the water network of Figure 1 represented according to the present invention;
- Figure 3 shows a diagram of a system for locating water leaks in a water network according to the present invention.

The references used herein are present only for convenience and therefore do not define the scope of protection or the scope of the embodiments.

In the following description, various specific details are illustrated, aimed at a thorough understanding of examples of one or more embodiments of the present invention.

The embodiments can be implemented without one or more of the specific details, or with other methods, components, materials, and so on. In other cases, known structures, materials, or operations are not shown or described in detail to avoid obscuring various aspects of the embodiments. The reference to "an embodiment" within this description indicates that a particular configuration, structure, or characteristic described in relation to the embodiment is included in at least one embodiment. Thus, phrases such as "in an embodiment", possibly present in various places in this description, are not necessarily referring to the same embodiment. Furthermore, particular configurations, structures, or characteristics can be combined in any suitable manner in one or more embodiments. A water network is an infrastructure that allows for the distribution of water to a plurality of connected users within a specific area of use. Different types of water networks are known, such as, for example, branched (or open) networks, looped (or closed) networks, and mixed networks comprising one or more loops and branches. The water network comprises a plurality of elements known in the state of the art such as, for example, pipes, fittings, valves, etc., whose arrangement allows for a specific type of network to be created.

The term node is intended as a connection point of the water network at which at least two conduits are connected.

The term conduit is intended as a continuous section of the water network through which a liquid, such as water, flows, not necessarily straight and not necessarily formed by a single conduit, wherein said section is comprised between two nodes generally indicated as a start node and an end node based on a hypothetical direction of fluid flow within the conduit.

The term inlet node is intended as a supply point of the water network through which water flows into the water network so that it can reach one or more users.

The term loop is intended as a subset of conduits belonging to the water network that determine a closed circuit, that is, when an end conduit is connected to a start conduit. One or more mutually connected loops constitute a network.

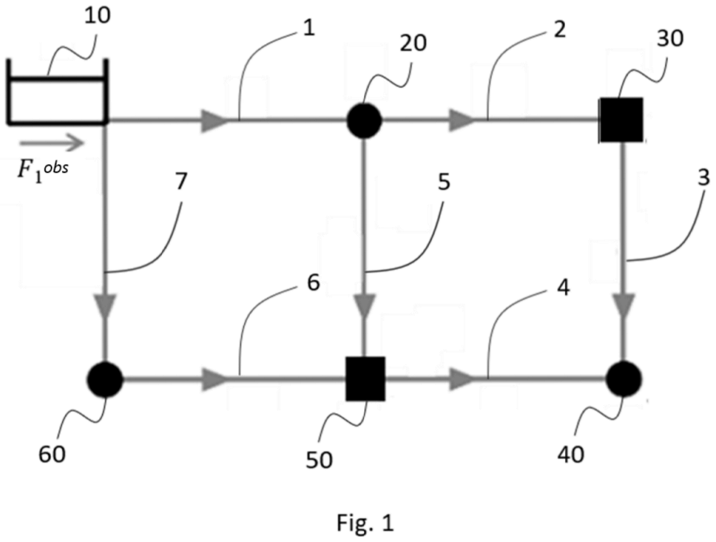

The water network of Figure 1 is an example of a two-loop water network comprising an arrangement of a plurality of conduits 1, 2, 3, 4, 5, 6, 7 and a plurality of nodes 10, 20, 30, 40, 50, 60. A first loop is defined by a first subset of conduits 1, 5, 6, 7 belonging to the plurality of conduits 1, 2, 3, 4, 5, 6, 7 and by a subset of nodes 10, 20, 50, 60 belonging to the plurality of nodes 10, 20, 30, 40, 50, 60. A second loop is instead defined by a second subset of conduits 2, 3, 4, 5 of the plurality of conduits 1, 2, 3, 4, 5, 6, 7 and by a subset of nodes 20, 30, 40, 50 of the plurality of nodes 10, 20, 30, 40, 50, 60.

In particular, the water network of Figure 1 comprises an inlet node 10 through which the water network is supplied by a water flow and a plurality of sensor nodes 30, 50 through which the water flow from the inlet node 10 circulates, said plurality of sensor nodes 30, 50 being a subset of the plurality of nodes 10, 20, 30, 40, 50, 60.

The water network of Figure 1 is represented according to the assumptions known in the state of the art suitable for defining a hydraulic model for said network.

A hydraulic model is intended as a conceptual representation of the water network defined on the basis of a plurality of structural characteristics of said network such as, for example, the type of network, the diameters and lengths of the conduits present, etc. Thanks to the definition of the hydraulic model, it is possible to perform numerous activities such as, for exemplary purposes, the design of new elements of the water network, the identification of deficiencies or malfunctions, etc., in order to offer a service adequate to the needs of a specific population.

A mathematical model of a water network, based on the hydraulic model and a plurality of data collected in the field, such as for example pressure values, flow rate values and consumption values associated with the water demand of one or more users connected to the water network, allows for the modeling of a plurality of hydraulic processes of a water network of interest by defining the fundamental equations of physics that govern its operation.

The continuity equations at the nodes as well as the momentum equations in the conduits belong to this category of fundamental equations at the basis of the mathematical models of water networks which, in accordance with the objects of the present invention, allow for the localization of one or more water leaks within the water network of interest. The continuity equations at the nodes, by the principle of conservation of mass, define as zero the sum of an incoming flow rate and an outgoing flow rate from a node belonging to the plurality of nodes 10, 20, 30, 40, 50, 60. Instead, the momentum equations in the conduits define the distribution of pressure heads in the conduits 1, 2, 3, 4, 5, 6, 7 of the water network through a relationship between a head loss and a flow rate circulating in the conduits.

Among the assumptions of the prior art that contribute to defining the mathematical model of a water network are: a first assumption regarding the inlet nodes 10 of the water network and a second assumption regarding the internal nodes 20, 30, 40, 50, 60 for said water network. The first assumption relating to the inlet nodes 10 allows for the definition of the inlet nodes 10 as fixed-head nodes. A fixed-head node is intended as a node where a total head is known, defined as the sum of a node elevation with respect to a reference zero, i.e., a height of the node with respect to a reference plane, a kinetic head and a pressure head. With reference to the example of the water network of Figure 1, the only inlet node 10 present in this water network is represented by a fictitious reservoir 10. The second assumption relating to the internal nodes of the network 20, 30, 40, 50, 60 allows for said internal nodes 20, 30, 40, 50, 60 to be defined as unknown-head nodes. Furthermore, still according to the assumptions of the prior art, respective water consumptions q₂₀, q₃₀, q₄₀, q₅₀, q₆₀ are allocated at the internal nodes 20, 30, 40, 50, 60 while no consumption allocation is made for the inlet nodes 10. This is due to the fact that, according to the assumptions of the prior art, at the inlet nodes 10 of a water network there is no water demand and, consequently, no fluid continuity condition is imposed for such nodes.

Numerous leak localization methods are known in the state of the art, based on mathematical models, defined according to the assumptions described above, which respond to the need of water network managers to find a solution to the problem of water leaks.

According to these state-of-the-art localization methods, it is possible to define an incidence matrix AA for the water network of Figure 1 suitable for describing its topological structure against the directions of the flows (indicated in Figure 1 with an arrow on the respective conduit) circulating within said water network.

The incidence matrix AA is defined as: $AA = \left[\begin{matrix}- 1 & 1 & 0 & 0 & 0 & 0 \\ 0 & - 1 & 1 & 0 & 0 & 0 \\ 0 & 0 & - 1 & 1 & 0 & 0 \\ 0 & 0 & 0 & 1 & - 1 & 0 \\ 0 & - 1 & 0 & 0 & 1 & 0 \\ 0 & 0 & 0 & 0 & 1 & - 1 \\ - 1 & 0 & 0 & 0 & 0 & 1\end{matrix}\right]$ (1)

The dimension of the incidence matrix AA is defined by a number of rows corresponding to a number of conduits 1, 2, 3, 4, 5, 6, 7 of the water network under consideration and by a number of columns corresponding to a number of nodes 10, 20, 30, 40, 50, 60 present in the same water network. For the water network of Figure 1, the incidence matrix AA thus has dimension 7 x 6.

For each row of the incidence matrix AA, i.e., for each conduit belonging to the plurality of conduits 1, 2, 3, 4, 5, 6, 7, a value equal to -1 is placed in correspondence with a cell whose respective column represents a start node for the conduit. For example, for conduit 7 a start node is represented by node 10, therefore in the corresponding cell, determined by the intersection of the row representative of conduit 7 and the column representative of node 10, the value -1 is placed.

A value equal to 1 is instead placed in correspondence with the cell whose respective column represents an end node for the conduit, i.e., for the row of the considered matrix. An example of an end node for the same conduit 7 is represented by node 60 and therefore, within the cell identified analogously to the previous example, the value 1 is placed. Finally, in the incidence matrix AA a value equal to 0 is placed in all other cases, i.e., when a given node is neither a start node nor an end node for the conduit under consideration from time to time. For example, as shown in Figure 1, the start node 60 is connected only to conduits 6, 7 and the relative column will have a value equal to zero in all the cells of the rows other than those corresponding to conduits 6, 7.

Considering the initial assumptions relating to fixed-head nodes and unknown-head nodes, the matrix AA can be redefined as two sub-matrices that group the fixed-head nodes on one side and the unknown-head nodes on the other.

Therefore, a first matrix A10 includes the inlet nodes 10 of the water network under consideration, i.e., for the network of Figure 1, only the inlet node 10 assumed as a fixed-head node.

This matrix A10 is therefore a matrix of dimension 7 x 1 defined as: $A 10 = \left[\begin{matrix}- 1 \\ 0 \\ 0 \\ 0 \\ 0 \\ 0 \\ - 1\end{matrix}\right]$ (2)

The inlet node 10 is a start node for both conduit 1 and conduit 7, as can also be observed in Figure 1 from the direction of the flows entering both conduits 1, 7. The remaining cells of the matrix A10, analogously to what is described for the incidence matrix AA, are set to a value equal to 0 since the inlet node 10 represents neither a start node nor an end node for the other conduits 2, 3, 4, 5, 6.

Analogously, a second matrix A12 includes the unknown-head nodes, which, still according to the assumptions described above, for the water network of Figure 1, are the nodes 20, 30, 40, 50, 60.

This matrix A12 is a matrix of dimension 7 x 5 defined as: $A 12 = \left[\begin{matrix}1 & 0 & 0 & 0 & 0 \\ - 1 & 1 & 0 & 0 & 0 \\ 0 & - 1 & 1 & 0 & 0 \\ 0 & 0 & 1 & - 1 & 0 \\ - 1 & 0 & 0 & 1 & 0 \\ 0 & 0 & 0 & 1 & - 1 \\ 0 & 0 & 0 & 0 & 1\end{matrix}\right]$ (3)

In general terms, the localization of a water leak is based on a definition of a system of momentum equations in the conduits and continuity equations at the nodes, the resolution of which allows obtaining information relating to the flow rates in the conduits and information on pressures at the nodes, given the availability of information relating to a plurality of characteristics of the water network, such as for example typology, diameters, lengths and roughness of the conduits, and also knowing the head conditions for the inlet nodes of the water network under consideration.

The prior art methods for leak localization, based on mathematical models defined by the assumptions described above, are based on these equations.

Within the scope of these methods, in the case where information relating to pressure measurements for the internal nodes of the water network, defined as sensor nodes 30, 50, and a relative altimetric elevation for the sensor nodes 30, 50 are available, and information relating to the flow rate for the inlet nodes 10 is also available, this information is used as comparison terms with respect to the results provided by the resolution of the system of equations.

For the water network of Figure 1, the sensor nodes are node 30 and node 50 whose observed total heads are H₃^{obs} and H₅^{obs} respectively. Still in this water network, the flow rate of the inlet node 10 is equal to F₁^{obs}.

When one or more leaks of unknown magnitude and position occur within the water network, the magnitude of these leaks can be estimated by performing a water balance between a net inflow into the water network and the sum of the water demands of the users allocated at the respective nodes 10, 20, 30, 40, 50, 60 for this water network. Regarding the localization of one or more leaks, according to the prior art methods described above, a possible solution is obtainable from the application of an iterative procedure of successive trials where, at each iteration, one proceeds to allocate one or more leaks at different points of the water network until the resolution of the system of equations defined for a given iteration allows to obtain an acceptable deviation between the simulated pressures obtained from the system and the measured pressures at the sensor nodes 30, 50.

It should therefore be noted how, at each iteration, it becomes necessary to adapt the magnitude of the water leak allocated at the plurality of nodes 10, 20, 30, 40, 50, 60 present in the water network and, consequently, the number of necessary iterations is directly proportional to the complexity of the water network and the number of nodes present.

The present invention, analogously to the prior art methods described, also defines a mathematical model defined according to a plurality of continuity equations at the nodes and momentum equations in the conduits and also uses a hydraulic model and a plurality of data collected in the field. However, unlike the prior art methods, the present invention bases the definition of the mathematical model on different assumptions from those previously described for the prior art methods. This difference in assumptions allows for obtaining a mathematical model that is more adherent to the hydraulic processes of the water network under consideration in order to overcome the limits highlighted of the prior art.

These assumptions according to the present invention comprise:
- the definition of each supply node 10 of a water network as an unknown-head node to which an incoming flow rate equal to a value measured in the field is imposed;
- the definition of each sensor node 30, 50 present within a water network as a fixed-head node (to which a pressure head equal to a value measured in the field is imposed and whose altimetric elevation of the sensoris also known).

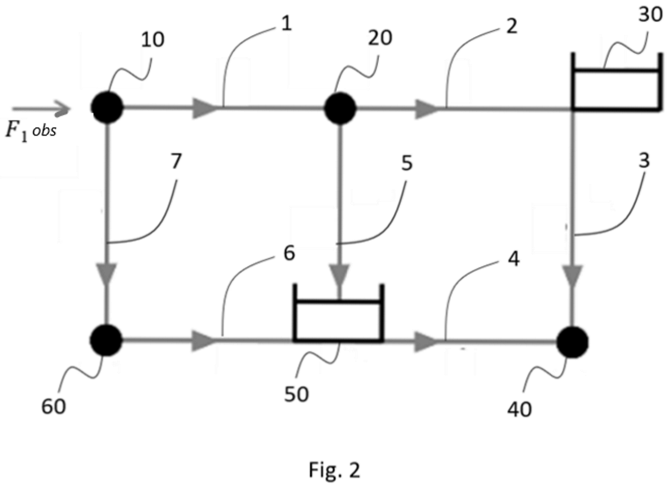

Figure 2 shows the two-loop water network of Figure 1 represented according to the assumptions of the present invention, the water network of Figure 2 having the same arrangement of the plurality of conduits 1, 2, 3, 4, 5, 6, 7, of the plurality of nodes 10, 20, 30, 40, 50, 60 and of the plurality of sensor nodes 30, 50.

In particular, in the water network shown in Figure 2, with reference to the first assumption according to the present invention, the inlet node 10 is defined as an unknown-head node while, with reference to the second assumption, the sensor nodes 30, 50 are defined as fixed-head nodes.

It should also be noted that the water network of Figure 2 is a simple example of a water network whose purpose is to provide the necessary support for understanding the present invention. In reality, a water network can comprise more inlet nodes 10 and have a highly looped structure.

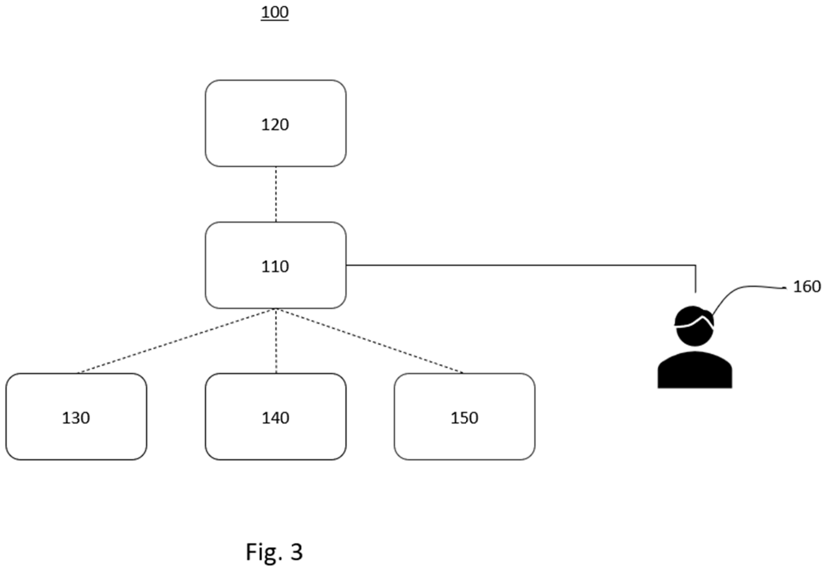

Figure 3 shows a diagram of a system 100 for locating water leaks within a water network according to the present invention.

In particular, the system 100 for locating water leaks comprises at least one processor 110 configured to locate at least one water leak by means of a mathematical model suitable for calculating a water leak value for the plurality of sensor nodes 30, 50in such a way that one or more nodes of the plurality of sensor nodes 30, 50 most influenced by an occurrence of a water leak are identified.

As will be explained in greater detail in the remainder of the present document, the water leak value calculated for the plurality of sensor nodes 30, 50 is carried out as a function of a water balance between a volume of water introduced into the water network and the water consumption generated by the at least one user in a mass continuity condition imposed on the plurality of nodes 10, 20, 30, 40, 50, 60.

This condition allows for imposing an equality constraint between the leak values calculated for the plurality of sensor nodes 30, 50 and the value of the total leaks present in the water network.

The at least one processor 110 comprises any electronic device suitable for executing one or more portions of software code, such as, for example, integrated circuits, microchips, microcontrollers, microprocessors, a central processing unit (CPU), a graphics processing unit (GPU), digital signal processors (DSP), a field programmable gate array (FPGA). The at least one processor 110 is further configured to receive a hydraulic model of the water network for which it is desired to locate at least one water leak and a plurality of data measured in the field in such a way as to provide at least one location of a water leak for the water network under examination as will be described in greater detail below. The hydraulic model comprises a plurality of structural characteristics of the water network under examination, namely for the plurality of conduits 1, 2, 3, 4, 5, 6, 7 and for the plurality of nodes 10, 20, 30, 40, 50, 60, and it is important that the information relating to this plurality of characteristics be as precise, complete and coherent as possible, since the adherence of such model to the real structure is directly linked to the reliability of the results obtained.

The plurality of structural characteristics comprises: water network topology, length of the plurality of conduits, type of the plurality of nodes, roughness coefficients of the plurality of conduits. When one or more control devices, valves, pumping stations, reservoirs are further present in the water network, the plurality of structural characteristics also comprises: concentrated head loss coefficients of the one or more valves, characteristic curves of the one or more pumps, volumes, elevations and geometric characteristics of the one or more reservoirs.

According to an embodiment of the present invention, the system 100 can also comprise a memory unit 120 on which a hydraulic model of the water network is stored, the memory unit 120 being operatively coupled to the at least one processor 110 in such a way that said memory unit 120 is adapted to send the hydraulic model to the at least one processor 110.

According to a further alternative embodiment, the hydraulic model is provided by a manager of the water network.

The plurality of data measured in the field comprises first flow rate data of a water flow entering the water network, second pressure head data in the water network for which the altimetric elevation with respect to the reference zero is known, third water consumption data relating to a water demand associated with at least one user connected to the water network.

More particularly, the first flow rate data are measured by means of first sensor means 130 associated with each inlet node 10 present within the water network under examination. In the example of the water network of Figure 2, the first sensor means 130 are associated with the single inlet node 10. Said first sensor means 130 comprise flow rate sensors.

According to an embodiment of the present invention, the first sensor means 130 are operatively coupled to the processor 110 in such a way that said first sensor means 130 are configured to send the first flow rate data to the processor 110.

According to another embodiment of the present invention, the first flow rate data are stored in the memory unit 120 operatively coupled to the at least one processor 110 and in which the memory unit 120 is configured to send said first flow rate data to the at least one processor 110.

According to a further embodiment of the present invention, the first flow rate data are provided by a manager of the water network.

The second pressure head data are measured by means of second sensor means 140 associated with each node of the plurality of sensor nodes 30, 50 present within the water network under examination, said plurality of sensor nodes 30, 50 being a subset of the plurality of nodes 20, 30, 40, 50, 60 through which the water flow from the at least one inlet node 10 circulates.

In the example of the water network of Figure 2, the second sensor means 140 are associated with the sensor nodes 30, 50. Said second sensor means 140 comprise pressure sensors.

According to an embodiment of the present invention, the second sensor means 140 are operatively coupled to the processor 110 in such a way that said second sensor means 140 are configured to send the second pressure data to the processor 110.

According to another embodiment of the present invention, the second pressure data are stored in the memory unit 120 operatively coupled to the at least one processor 110 and in which the memory unit 120 is configured to send said second pressure data to the at least one processor 110.

According to a further embodiment of the present invention, the second pressure data are provided by the manager of the water network.

The third consumption data relating to a water demand associated with at least one user connected to the water network are measured by third sensor means 150 associated with each internal node 20, 30, 40, 50, 60 where respective water consumptions of the plurality of nodes 10, 20, 30, 40, 50, 60 are allocated.

In the example of the water network of Figure 2, the third sensor means 150 are associated with the nodes 20, 30, 40, 50, 60. Said third sensor means 150 comprise mechanical meters, smart meters.

According to an embodiment of the present invention, the third sensor means 150 are operatively coupled to the processor 110 in such a way that said third sensor means 150 are configured to send said third water consumption data to the processor 110.

According to another embodiment of the present invention, the third water consumption data are stored in the memory unit 120 operatively coupled to the at least one processor 110 and in which the memory unit 120 is configured to send said third water consumption data to the at least one processor 110.

According to a further embodiment of the present invention, the third water consumption data are provided by the manager of the water network.

The equations defining the mathematical model according to the present invention, which allow modeling the behavior of the water network in a scenario in which one or more water leaks are present within said water network, will be described below in greater detail with reference to the network of Figure 2.

Therefore, on the basis of the assumptions according to the present invention applied to the water network of Figure 2, an incoming flow rate value equal to F₁^{obs} measured by the first sensor means 130 is imposed on the inlet node 10, while a head value based on the values measured by the second sensor means 140 is imposed on the sensor nodes 30, 50. Starting from the first assumption according to the present invention, imposing the incoming flow rate F1,oss on the inlet node 10 of the water network of Figure 2 is equivalent to imposing a negative water demand condition for said inlet node 10 defined as: ${q}_{1} = - {{F}_{1}}^{obs}$ (4)

For the inlet node 10, it is therefore possible to set a continuity equation defined as: ${Q}_{1} + {Q}_{7} = {{F}_{1}}^{obs}$ (5) where *Q₁* and *Q₇* represent respectively the flow rates flowing out from the inlet node 10 towards conduit 1 and conduit 7. It is important to underline how, instead, according to the methods of the prior art, for the inlet node 10, being considered a fixed-head node, neither a water demand is defined nor, consequently, a continuity condition is imposed on said node.

Considering the second assumption, the plurality of sensor nodes 30, 50, for which second head data are available, is imposed with a head value determined on the basis of the values measured by the second sensor means 140. The plurality of sensor nodes 30, 50 is represented in Figure 2 as fictitious reservoirs.

Taking into account the new assumptions according to the present invention, it is possible to represent new matrices referring to the fixed-head nodes and the unknown-head nodes. The matrix A10* relating to the fixed-head nodes, i.e., to the plurality of sensor nodes 30, 50, becomes: $A 10 * = \left[\begin{matrix}0 & 0 \\ 1 & 0 \\ - 1 & 0 \\ 0 & - 1 \\ 0 & 1 \\ 0 & 1 \\ 0 & 0\end{matrix}\right]$ (6)

The matrix A12* relating to the unknown-head nodes, i.e., to the inlet node 10 and the nodes 20, 40, 60, becomes: $A 12 * = \left[\begin{matrix}- 1 & 1 & 0 & 0 \\ 0 & - 1 & 0 & 0 \\ 0 & 0 & 1 & 0 \\ 0 & 0 & 1 & - 1 \\ 0 & - 1 & 0 & 1 \\ 0 & 0 & 0 & 1 \\ - 1 & 0 & 0 & 0\end{matrix}\right]$ (7)

From the matrices A10* and A12*, having a hydraulic model of the water network under examination, it is possible to define the mathematical model by which it is possible to locate the leaks with respect to the plurality of sensor nodes 30, 50 within the water network. The mathematical model is based on a system of N non-linear equations in N unknowns whose solution provides indications relating to the one or more sensor nodes 30, 50 most influenced by a water leak event.

The system of equations comprises both a plurality of momentum equations in the conduits and a plurality of continuity equations at the nodes in which the N unknowns of this system are defined by:
- a plurality of flow rate values Q₁, Q₂, Q₃, Q₄, Q₅, Q₆, Q₇ in the respective plurality of conduits 1, 2, 3, 4, 5, 6, 7;
- a plurality of head values H₁, H₂, H₄, H₆ in the nodes for which such values are unknown, i.e., in the nodes of the water network not belonging to the plurality of sensor nodes 30, 50 for which the second head data are available;
- a plurality of lost flow rates L₃, L₅ in the plurality of sensor nodes 30, 50.

The resulting system of equations according to the example of the water network of Figure 2 is a system of 13 equations in 13 unknowns defined as: $\left\{\begin{matrix}{r}_{1} {Q}_{1} \left|{Q}_{1}\right| - {H}_{1} + {H}_{2} = 0 \\ {r}_{2} {Q}_{2} \left|{Q}_{2}\right| - {H}_{2} = - {H}_{3} \\ {r}_{3} {Q}_{3} \left|{Q}_{3}\right| + {H}_{4} = {H}_{3} \\ {r}_{4} {Q}_{4} \left|{Q}_{4}\right| + {H}_{4} = {H}_{5} \\ {r}_{5} {Q}_{5} \left|{Q}_{5}\right| - {H}_{2} = - {H}_{5} \\ {r}_{6} {Q}_{6} \left|{Q}_{6}\right| - {H}_{6} = - {H}_{5} \\ {r}_{7} {Q}_{7} \left|{Q}_{7}\right| - {H}_{1} + {H}_{6} = 0 \\ - {Q}_{1} - {Q}_{7} = - {F}_{1}^{oss} \\ {Q}_{1} - {Q}_{2} - {Q}_{5} = {q}_{2} \\ {Q}_{2} - {Q}_{3} - {L}_{3} = {q}_{3} \\ {Q}_{3} + {Q}_{4} = {q}_{4} \\ {Q}_{5} + {Q}_{6} - {Q}_{4} - {L}_{5} = {q}_{5} \\ {Q}_{7} - {Q}_{6} = {q}_{6}\end{matrix}\right.$ (8)

In particular, the first seven equations of the system are momentum equations in the conduits defined for the plurality of conduits 1, 2, 3, 4, 5, 6, 7 according to the form *ΔH=rQ*|*Q*| in which, for a given conduit, Δ*H* represents a head loss within said conduit due to a friction resistance between the water and the internal walls of the conduit, r represents a resistance coefficient of the conduit, Q represents a flow rate in the conduit and |*Q*| represents the modulus of the flow rate for said conduit. The resistance coefficient r depends on the characteristics of the conduit.

According to a Darcy-Weisbach formulation, this coefficient is defined as: $r = λL / 2 {gDA}^{2}$ (9) in which *λ* represents a resistance index that depends on the type of water flow within a conduit and on the hydraulic characteristics of said conduit, such as for example the roughness, L represents a length of the conduit, g represents the acceleration of gravity, D represents the diameter of the conduit and A represents the cross-sectional area of the conduit.

The subsequent six equations of the system (8) are continuity equations imposed at the nodes of the water network. The continuity equations require that the sum of the incoming flow rates at the nodes 10, 20, 30, 40, 50, 60 of the water network must be equal to the sum of the outgoing flow rates from the same nodes.

The continuity equations can therefore be defined in the form: ${ΣQ}_{in} - {ΣQ}_{out} = q$ (10) in which *Qᵢₙ* and *Qₒᵤₜ* represent the incoming flow rates and the outgoing flow rates in the plurality of nodes 10, 20, 30, 40, 50, 60 of the water network and q represents the total water demand present in said plurality of nodes 10, 20, 30, 40, 50, 60.

In particular, the continuity equations defined for each node belonging to the plurality of sensor nodes 30, 50 include a term referring to a lost flow rate L in the plurality of sensor nodes 30, 50 in such a way as to allow determining which of the nodes of the plurality of sensor nodes 30, 50 is closest to a water leak.

The resolution of the system of equations (8) allows deriving the flow rates in the plurality of conduits 1, 2, 3, 4, 5, 6, 7 pertaining to the plurality of sensor nodes 30, 50. In particular, the resolution of the continuity equations in said plurality of sensor nodes 30, 50 provides the magnitude of the lost flow rate L in proximity to both sensor node 30 and sensor node 50 and defined as: $L 3 = Q 2 - Q 3 - q 3$ (11) $L 5 = Q 5 + Q 6 - Q 4 - q 5$ (12)

The mathematical model defined by the system of equations (8) described above, based on the first flow rate data, second head data and third water consumption data, is configured to calculate a water leak value for each node belonging to the plurality of sensor nodes 30, 50 as a function of the water balance between the volume of water introduced into the water network and the water consumption generated by the at least one user in a mass continuity condition imposed on the plurality of nodes 10, 20, 30, 40, 50, 60. The mass continuity condition allows imposing an equality constraint between the leak values calculated for the plurality of sensor nodes 30, 50 and the total leak value present within the water network under examination, respecting the global level of leakage that occurs within the water network.

The mathematical model defined by the system of non-linear equations (8) can be solved by applying a plurality of methods such as, for example, the Global Gradient Algorithm (GGA) or other types of methods for solving systems of non-linear equations, known in the state of the art and which for this reason will not be described.

The mathematical model according to the present invention can be applied to any type of water network in which the circulation of water occurs under pressure, regardless of its length, complexity or degree of looping.

The reliability of the results provided by the mathematical model in the localization of leaks according to the present invention is influenced by the number and disposition of the second sensor means 140.

In fact, the highest degree of reliability of the results is obtained when the water network under examination is uniformly covered by the second sensor means 140. By uniformly covered is meant a water network in which there are no zones with a higher concentration and zones with a lower concentration of said second sensor means 140.

According to an embodiment of the present invention, the mathematical model defined according to the assumptions described above allows for the localization of one or more leaks present in the water network given the availability of the first flow rate data, second pressure head data and third water consumption data, measured at a single time instant, for example, against the average values relating to an hour of the day.

According to another embodiment of the present invention, the mathematical model according to the assumptions described above allows for the localization of one or more leaks present in the water network given the availability of the first flow rate data, second pressure head data and third water consumption data measured a plurality of times within a limited time interval, which allows for obtaining a more robust and reliable localization of the water leaks. Examples of preferred time intervals are, for example, 8, 12, 24 hours. The time interval that allows achieving robust and reliable results is a limited time interval, i.e., a period of time not sufficient to create a data set usable in a training phase of a system based on artificial intelligence.

The quality of the results provided by the mathematical model is obviously influenced by the presence of any inaccuracies and uncertainties in the measurement of the first flow rate data, second pressure head data and third water consumption data, as well as by inaccuracies and uncertainties related to the knowledge of the water network topology, the length of the plurality of conduits, the type of the plurality of nodes, the roughness coefficients of the plurality of conduits, the material of the plurality of conduits, the age of the plurality of conduits and the presence and relative characteristics of any control devices, valves, pumping systems.

According to a further aspect of the present invention, a computer program is provided comprising a plurality of portions of software code suitable for implementing the mathematical model described above in such a way that said portions of software code, when executed within the at least one processor 110, allow the localization of one or more water leaks within a water network under examination on the basis of a hydraulic model and a plurality of data collected in the field.

The portions of software code executed by a processor can, for example, be preloaded in a memory integrated with the processor or incorporated therein, or they can be stored in a separate memory. The memory can comprise a random access memory (RAM), a read-only memory (ROM), a hard disk, an optical disk, a magnetic medium, a flash memory, other permanent, fixed or volatile memories or any other mechanism capable of storing the portions of software code.

The information provided by the mathematical model is further processed by the at least one processor 110 in order to allow its visualization to a user 160 by means of visualization means such as, for example, a screen of a computer, smartphone, tablet, etc. The present invention allows overcoming the problems of the prior art solutions by offering a solution that allows locating the leaks present within a water network independently of the use of intrusive diagnostic tools, thanks to the use of a mathematical model capable of identifying the nodes belonging to the plurality of sensor nodes 30, 50 most influenced by a water leak event.

Moreover, the present invention allows for locating leaks within a water network requiring less computational effort compared to the prior art solutions, since, on the one hand, it does not require the iterative application of numerous hydraulic simulations to converge to a solution and, on the other hand, it does not even require the availability of a history of information of sufficient dimensions for the training of a system based on artificial intelligence.

Naturally, the principle of the invention remains the same, the embodiments and the details of realization can be widely varied with respect to what has been described and illustrated for purely exemplary and non-limiting purposes, without thereby departing from the scope of protection of the present invention defined by the appended claims.

## Claims

1. System (100) for locating water leaks in a water network connected to at least one user to which a water consumption is associated, the system (100) comprising:
at least one processor (110) configured to:
- receive a hydraulic model for said water network comprising structural characteristics of a plurality of conduits (1, 2, 3, 4, 5, 6, 7) and of a plurality of nodes (10, 20, 30, 40, 50, 60), wherein said plurality of nodes (10, 20, 30, 40, 50, 60) is defined as connection points between at least two conduits belonging to the plurality of conduits (1, 2, 3, 4, 5, 6, 7);
- receive first flow rate data of an incoming water flow into the water network, wherein said first data are measured by means of first sensor means (130) associated with at least one inlet node (10), said at least one inlet node (10) being a node belonging to the plurality of nodes (10, 20, 30, 40, 50, 60) through which the water flow enters the water network;
- receive second pressure head data measured by means of second sensor means (140) associated with a plurality of sensor nodes (30, 50), said plurality of sensor nodes (30, 50) being a subset of the plurality of nodes (10, 20, 30, 40, 50, 60) through which the water flow from the at least one inlet node (10) circulates;
- receive third water consumption data of the at least one user, wherein said third water consumption data are measured by means of third sensor means (150) associated with each node of the plurality of nodes (10, 20, 30, 40, 50, 60);
- locate at least one water leak by means of a mathematical model suitable for calculating a water leak value for the plurality of sensor nodes (30, 50) as a function of a water balance between a volume of water introduced into the water network and the water consumption generated by the at least one user in a mass continuity condition imposed on the plurality of nodes (10, 20, 30, 40, 50, 60), said condition being suitable for equating the leaks calculated for the plurality of sensor nodes (30, 50) to the total leaks present in the water network, and wherein said water leak value is calculated as a function of said hydraulic model, said first flow rate data, said second pressure head data and said third water consumption data.

2. The system (100) according to claim 1, wherein said mathematical model is a system of N non-linear equations in N unknowns comprising a first plurality of momentum equations of the conduits and a second plurality of continuity equations at the nodes.

3. The system (100) according to claim 1, wherein said first flow rate data, said second pressure head data and said third consumption data are measured within a time interval suitable for defining a motion of the fluid within said water network.

4. The system (100) according to claim 3, wherein said time period is equal to 24 hours.

5. The system (100) according to claim 1, wherein said first sensor means (130) comprise flow rate sensors.

6. The system (100) according to claim 1, wherein said second sensor means (140) are associated with the plurality of sensor nodes (30, 50) uniformly within said water network.

7. The system (100) according to claim 6, wherein said second sensor means (140) are pressure sensors.

8. The system (100) according to claim 1, wherein said third sensor means (150) comprise mechanical meters, smart meters.

9. The system (100) according to the preceding claims, wherein said structural characteristics of said hydraulic model comprise: water network topology, length of the plurality of conduits, type of the plurality of nodes, roughness coefficients of the plurality of conduits, concentrated head loss coefficients of one or more valves, characteristic curves of one or more pumps, volumes, elevations and geometric characteristics of one or more reservoirs or their combinations.

10. The system (100) according to one or more of the preceding claims, wherein said system (100) further comprises a memory unit (120) in which is stored at least one of said hydraulic model, said first flow rate data, said second pressure data, said third water consumption data, and wherein said memory unit (120) is operatively coupled to the at least one processor (110) in such a way that said memory unit (120) is adapted to send at least one of said hydraulic model, said first flow rate data, said second pressure data, said third water consumption data to the at least one processor (110).

11. The system according to one or more of the preceding claims, wherein at least one of said hydraulic model, said first flow rate data, said second pressure data, said third water consumption data is provided by a manager of the water network.

12. A method for locating water leaks in a water network connected to at least one user to which a water consumption is associated, the method comprising the steps of:
- receiving a hydraulic model for said water network comprising structural characteristics of a plurality of conduits (1, 2, 3, 4, 5, 6, 7) and of a plurality of nodes (10, 20, 30, 40, 50, 60), wherein said plurality of nodes (10, 20, 30, 40, 50, 60) is defined as connection points between at least two conduits belonging to the plurality of conduits (1, 2, 3, 4, 5, 6, 7);
- receiving first flow rate data of an incoming water flow into the water network, wherein said first data are measured by means of first sensor means (130) associated with at least one inlet node (10), said at least one inlet node (10) being a node belonging to the plurality of nodes (10, 20, 30, 40, 50, 60) through which the water flow enters the water network;
- receiving second pressure head data measured by means of second sensor means (140) associated with a plurality of sensor nodes (30, 50), said plurality of sensor nodes (30, 50) being a subset of the plurality of nodes (10, 20, 30, 40, 50, 60) through which the water flow from the at least one inlet node (10) circulates;
- receiving third water consumption data of the at least one user, wherein said third water consumption data are measured by means of third sensor means (150) associated with each node of the plurality of nodes (10, 20, 30, 40, 50, 60);
- locating at least one water leak by means of a mathematical model suitable for calculating a water leak value for the plurality of sensor nodes (30, 50) as a function of a water balance between a volume of water introduced into the water network and the water consumption generated by the at least one user in a mass continuity condition imposed on the plurality of nodes (10, 20, 30, 40, 50, 60), said condition being suitable for equating the leaks calculated for the plurality of sensor nodes (30, 50) to the total leaks present in the water network, and wherein said water leak value is calculated as a function of said hydraulic model, said first flow rate data, said second pressure head data and said third water consumption data.

13. The method according to claim 12, wherein said mathematical model is a system of N non-linear equations in N unknowns comprising a first plurality of momentum equations of the conduits and a second plurality of continuity equations at the nodes.

14. The method according to claim 12, wherein said first flow rate data, said second pressure head data and said third consumption data are measured within a time interval suitable for defining a motion of the fluid within said water network.

15. The method according to claim 14, wherein said time interval is equal to 24 hours.

16. The method according to claim 12, wherein said second sensor means (140) are associated with the plurality of sensor nodes (30, 50) uniformly within said water network.

17. The method according to claim 12, wherein said structural characteristics of said hydraulic model comprise: water network topology, length of the plurality of conduits, type of the plurality of nodes, roughness coefficients of the plurality of conduits, concentrated head loss coefficients of one or more valves, characteristic curves of one or more pumps, volumes, elevations and geometric characteristics of one or more reservoirs or their combinations.

18. A computer program comprising a plurality of portions of software code executable in at least one processor (110) of a system (100) for locating water leaks according to one or more of claims 1 to 11, said portions of code being suitable for performing the steps of the method according to one or more of claims 12 to 17.
